# EUROPÄISCHE PATENTSCHRIFT

(11) **EP 2 923 015 B1**
(45) Veröffentlichungstag und Bekanntmachung des Hinweises auf die Patenterteilung: **09.01.2019**
(21) Anmeldenummer: 13792680.4
(22) Anmeldetag: 19.11.2013
(51) Int. Cl.: E04H 5/04, H02B 7/06

(54) **ÜBERGABESTATION ZUR EINSPEISUNG ELEKTRISCHER ENERGIE, SOWIE WINDENERGIEANLAGENPARK MIT SOLCHER ÜBERGABESTATION**
TRANSFER STATION FOR FEEDING ELECTRICAL ENERGY AND WIND FARM HAVING SUCH A TRANSFER STATION
POSTE DE TRANSFERT POUR INJECTER DE L'ÉNERGIE ÉLECTRIQUE, AINSI QUE PARC D'ÉOLIENNES ÉQUIPÉ D'UN TEL POSTE DE TRANSFERT

(30) Priorität: 23.11.2012 DE 102012221498
(43) Veröffentlichungstag der Anmeldung: 30.09.2015
(73) Patentinhaber: Wobben Properties GmbH, 26607 Aurich (DE)
(72) Erfinder: VAN DYK, Holger, 26632 Ihlow (DE); FLESSNER, Heinz, 26632 Ihlow (DE)
(74) Vertreter: Eisenführ Speiser
(86) Internationale Anmeldenummer: PCT/EP2013/074126
(87) Internationale Veröffentlichungsnummer: WO 2014/079824

(56) Entgegenhaltungen:
- DE-A1- 2 626 186
- DE-A1- 10 009 013

## Beschreibung

Die vorliegende Erfindung betrifft eine Übergabestation zur Einspeisung lokal bereitgestellter elektrischer Energie, insbesondere bereitgestellt von einer oder mehreren Windenergieanlagen, in ein Stromnetz. Die Erfindung betrifft weiterhin einen Windenergieanlagenpark mit einer oder mehreren solcher Übergabestationen.

Windenergieanlagen werden in zunehmendem Maß zur Bereitstellung elektrischer Energie verwendet. Mittels Generatoren wird die durch Windkraft erzeugte Rotationsbewegung von Rotoren in eine Wechselspannung gewandelt, welche sodann von der Windenergieanlage abgeleitet und schlussendlich in ein Versorgernetz, im Folgenden auch Stromnetz genannt eingespeist wird. Zur Einspeisung wird die von der Windenergieanlage erzeugte Spannung mittels verschiedener Steuermittel in die notwendige Form gebracht. Hierzu ist zumeist der Einsatz von Wechsel- und/oder Gleichrichtern erforderlich, sowie eines oder mehrerer Transformatoren. Diese Zwischenschritte erfolgen in der Windenergieanlage selbst, oder in entsprechenden Steuereinrichtungen extern zur Windenergieanlage. Falls extern zur Windenergieanlage Steuermittel notwendig sind und weitere Infrastruktur zur Einspeisung notwendig ist, werden die Steuermittel hierzu in Umhausungen untergebracht, um einen Schutz äußeren Einflüssen einerseits und den Schutz der Umwelt vor Spannungsschäden andererseits zu gewährleisten. Diejenigen Umhausungen, die den Anschluss an das Stromnetz beherbergen, werden in der Branche als Übergabestationen bezeichnet.

In diesen Übergabestationen sind Steuereinheiten vorgesehen, welche dafür sorgen, dass die der Übergabestation zugeführte Spannung derart bereitgestellt wird, dass sie über einen stromnetzseitigen Leitungsanschluss in das Stromnetz eingespeist werden kann. Inwieweit hierfür die innerhalb der Übergabestation Spannungsrichtung und/oder Transformation notwendig ist, hängt im jeweiligen Einsatzfall von den eingesetzten Windenergieanlagen und eventuell zwischengeschalteten weiteren Stationen ab.

Aufgrund der hohen auftretenden Spannungen bzw. Ströme an solchen Übergabestationen, welche bisweilen die von mehreren Windenergieanlagen bereitgestellte elektrische Energie sammeln und zur Einspeisung aufbereiten, besteht das Risiko von Kurzschlüssen in den Steuereinheiten. Hierbei kann es in Extremsituationen vorkommen, dass Lichtbögen im Inneren der Steuereinheiten gebildet werden, die sodann zu einer Gasexplosion im Inneren der Übergabestation führen, einhergehend mit der Ausbreitung einer Druckwelle und starker Rauchentwicklung. Insbesondere für in der Übergabestation zum Zeitpunkt der Lichtbogenentstehung befindliche Personen stellt dies ein großes Gesundheitsrisiko dar.

Es sind aus dem Stand der Technik verschiedene Vorkehrungen bekannt, die zum Ziel haben, den in der Übergabestation auftretenden Rauch in jenem Bereich, in dem sich Personen aufhalten können, möglichst schnell zu entfernen. So betrifft die DE 100 09 013 A1 eine transportable Raumzelle in Form einer teilweise in Erdreich abgesenkten, einen Umspannraum für einen Transformator sowie Räume für Spannungsanlagen enthaltenden begehbaren Umspannstation. Diese weist Front- und Seitenwände und wenigstens eine auf diese aufgesetzte Dachplatte auf, wobei in zumindest einer der Wände eine Ausnehmung für eine Lüftertür oder ein vergleichbares türartiges Verschließelement des Umspannraumes vorgesehen ist. Ferner betrifft die DE 26 26 186 A1 ein Gebäude für eine elektrische Umspann- oder Schaltstation mit einer explosionsgefährdeten Mittelspannungs-Schaltanlage, bei dem vor der Schaltanlage ein Bedienungsraum vorgesehen ist und die Schaltanlage eine für den Austritt einer Explosion geeignet ausgebildete Seite aufweist. Ferner sind Druckentlastungsöffnungen vorgesehen, die vorzugsweise höher angeordnet sind als die Schaltanlage hoch ist, wobei ein die Explosionsaustrittsseite mit den Druckentlastungsöffnungen verbindender Ausbreitungsraum vorgesehen ist. Es besteht allerdings hinsichtlich der grundsätzlichen Anlagensicherheit solcher Übergabestationen nach wie vor Verbesserungsbedarf.

Angesichts fortwährender Steigerungen in der Absatzzahl von Windenergieanlagen und einer zunehmenden dezentralen Organisation der Stromerzeugung aufgrund der wachsenden Anteile an regenerativer Energie besteht insbesondere zusätzlich die Aufgabe, die Sicherheitsverbesserung bei Übergabestationen mit wirtschaftlicher Effizienz zu gewährleisten.

Demzufolge lag der Erfindung die Aufgabe zugrunde, eine Übergabestation anzugeben, die auf wirtschaftlich möglichst effiziente Art und Weise einen verbesserten Schutz von Personen gegen die Folgen von Lichtbogenbildung in der Übergabestation bietet.

Die Erfindung löst die ihr zugrunde liegende Aufgabe gemäß der vorliegenden Erfindung durch eine Übergabestation gemäß Anspruch 1. Insbesondere löst die Erfindung diese Aufgabe somit bei einer Übergabestation der eingangs genannten Art, indem diese einen stromnetzseitigen Leitungsanschluss, eine Steuereinheit, die zum Regeln der Netzeinspeisung, insbesondere zum Wandeln der lokal bereitgestellten elektrischen Energie und der Netzeinspeisung mittels des stromnetzseitigen Leitungsanschlusses eingerichtet ist, und eine, vorzugsweise wetterfeste und abschließbare, Umhausung aufweist, innerhalb welcher die Leitungsanschlüsse, die Verbindungsmittel und die Steuereinheit angeordnet sind, wobei die Umhausung einen ersten, begehbaren Raum und einen zweiten, mittels einer Abluftleitung mit der Außenwelt verbundenen Raum aufweist, der erste Raum und der zweite Raum mittels einer gemeinsamen Ausnehmung miteinander verbunden sind, die Steuereinheit die gemeinsame Ausnehmung verschließt, und wobei ein Gehäuse der Steuereinheit im Bereich des Verschlusses der Ausnehmung offen ist und/oder eine Sollbruchstelle aufweist, die zum Versagen bei Entstehen eines Lichtbogens innerhalb der Steuereinheit angepasst ist, wobei sich die Abluftleitung von dem zweiten Raum (11) aus durch eine Durchführungsöffnung (15) in den ersten Raum (5) hinein und durch den ersten Raum (5) hindurch erstreckt, und aus einer Seiten- oder Deckenwandung der Umhausung (3) aus dem ersten Raum (5) herausgeführt ist, und wobei die Abluftleitung mittels eines teilbaren Flansches (21) durch die Durchführungsöffnung (15) hindurchgeführt ist.

Die Erfindung macht sich hierbei die Erkenntnis zunutze, dass der Schutz für in der Übergabestation befindliche Personen gegen Einwirkungen der Druckwelle und der Rauchentwicklung dann am größten ist, wenn derjenige Bereich, in dem sich Personen aufhalten können, in möglichst geringem Ausmaß der Druckwelle und vor allem dem sich bildenden Rauch ausgesetzt wird. Anstelle auf eine schnelle Abführung der Druckwelle und des Rauchs aus dem Personenbereich hinzuwirken, verfolgt die Erfindung den Ansatz, nach Möglichkeit die Druckausbreitung und Rauchentwicklung gar nicht erst in demjenigen Raum auftreten zu lassen, in welchem sich Personen befinden können. Die vorgeschlagene Lösung sieht daher vor, die Steuereinheit in der Übergabestation in vorstehend beschriebener Weise über einer Durchgangsöffnung zu einem zweiten Raum zu positionieren, wobei die Steuereinheit so ausgebildet ist, dass der in der Steuereinheit entstehende Lichtbogen und die mit ihm entstehende Druckwelle sich, dem Weg des geringsten Widerstands folgend, durch die gemeinsame Ausnehmung hindurch und in den zweiten Raum hinein ausbreiten, in welchem sich die Person nicht aufhält. Da dieser zweite Raum mit einer Abluftleitung verbunden ist, kann die Druckwelle und der entstandene Rauch durch jene Abluftleitung aus der Umhausung abgeführt werden. Die Rauch- und Druckbelastung für gegebenenfalls in dem ersten Raum befindliche Personen ist im Vergleich zu bekannten Lösungen hierdurch deutlich reduziert.

Dadurch, dass die Abluftleitung bis zum Punkt ihrer Ausführung aus der Umhausung vollständig innerhalb der Umhausung verlegt ist, ist sie gegen äußere Einflüsse besser geschützt. Zudem ist eine Zustandsüberprüfung der Dichtflächen im Inneren der Übergabestation hierdurch ermöglicht. Ein weiterer Vorteil wird darin gesehen, dass die Außenmaße der Übergabestation nicht zusätzlich durch Anbauteile wie extern verlegte Abluftleitungen erhöht werden. Der Flansch weist zwei Teilhälften auf, die die Abluftleitung jeweils zur Hälfte umgreifen. Die Ausführung eines Flansches als teilbarer Flansch hat den Vorteil, dass dieser leichter von der Abluftleitung lösbar ist, beispielsweise wenn eine Wartung oder ein Austausch der Abluftleitung notwendig wird. Ein weiterer Vorteil eines auf diese Weise auswechselbaren Flansches ist es, dass eine einheitliche Gestaltung der Umhausung der Übergabestation ermöglicht wird. Es können für Schaltanlagen jedweder Größe die gleichen Bodenplatten, welche den ersten Raum vom zweiten Raum trennen, verwendet werden. Je nach Größe der Steuereinrichtungen muss die Abluftleitung, welche als Fallrohr den ersten Raum durchmisst, unterschiedliche Durchmesser aufweisen. Durch Auswahl eines passsenden, vorzugweise teilbaren, Flansches wird es allerdings möglich, Abluftleitungen verschiedener Durchmesser bei immer gleicher Bodenplatte einzusetzen, indem der Flansch entsprechend an die Abluftleitung einerseits und die Größe der Durchführungsöffnung andererseits angepasst ist.

Vorzugsweise weist gemäß der Erfindung die Abluftleitung ein Fallrohr auf, welches mit einem Rückschlagelement wirkend verbunden ist, wobei das Rückschlagelement dazu eingerichtet ist, das Fallrohr bei Überdruck in dem zweiten Raum freizugeben. Unter Überdruck wird hierbei der relativ zum Umgebungsdruck außerhalb der Umhausung anliegende Luftdruck im zweiten Raum verstanden.

Das Rückschlagelement ist vorzugsweise zwischen einer Sperrposition und einer Freigabeposition hin- und herbewegbar. Weiter vorzugsweise befindet sich das Rückschlagelement in einer normalerweise geschlossenen Position (NC), der sogenannten Sperrposition und ist mittels des im zweiten Raum herrschenden Überdrucks ab Erreichen eines kritischen Druckwertes aus der Sperrposition in die Freigabeposition bewegbar, sowie bei Unterschreiten des kritischen Druckwerts mittels der Schwerkraft und/oder mittels eines Rückstellmittels selbsttätig in die Sperrposition zurückbewegbar. Falls ein zusätzliches Rücksperrmittel, zum Unterstützen der Schwerkraft und Erhöhen des kritischen Druckwerts, ab dem eine Auslösung erfolgt, vorzusehen ist, wird bevorzugt, dieses Rückstellmittel als Zugfeder auszubilden.

Gemäß einer besonders bevorzugten Ausführungsform der Erfindung ist der zweite Raum unterhalb des ersten Raums angeordnet und durch eine gemeinsame Wandung von diesem getrennt. Unter Wandung wird dabei ein Boden- bzw. Deckenelement wie eine gemeinsame Boden- bzw. Deckenplatte verstanden. Gemäß dieser Ausführungsform ist besonders vorteilhaft, dass keine Abkehr von bereits etablierten Raumaufteilungskonzepten notwendig ist. Die stromnetzseitige Anschlussleitung wird vorzugsweise in den "Keller" der Übergabestation, also in den zweiten Raum hinein verlegt. Der zweite Raum ist bei aufgestellter und eingelassener Übergabestation vorzugsweise zumindest abschnittsweise im Erdreich eingelassen. Der ansonsten ungenutzte Hohlraum unterhalb des ersten Raumes in der Übergabestation nimmt gemäß der Erfindung nun zusätzlich die Funktion wahr, als Erweiterung der Abluftleitung zu dienen.

Die Erfindung betrifft gemäß einem zweiten Aspekt einen Windenergieanlagenpark gemäß Anspruch 6. Die Erfindung löst die ihr zugrunde liegende Aufgabe bei diesem Windenergieanlagenpark, welcher eine oder mehrere Windenergieanlagen zur Bereitstellung elektrischer Energie aufweist, und eine oder mehrere Übergabestationen, die mittels elektrischer Leitung mit der einen oder den mehreren Windenergieanlagen verbunden sind, in dem die eine oder mindestens eine der mehreren Übergabestationen nach einem der Ansprüche 1 bis 5, ausgebildet ist.

Die Erfindung wird im Folgenden anhand bevorzugter Ausführungsformen und unter Bezugnahme auf die beigefügten Figuren näher beschrieben. Hierbei zeigen:
- Figur 1: eine schematische räumliche Darstellung einer Übergabestation gemäß einem bevorzugten Ausführungsbeispiel, und
- Figur 2: eine schematische Querschnittsansicht durch die Übergabestation gemäß Figur 1.

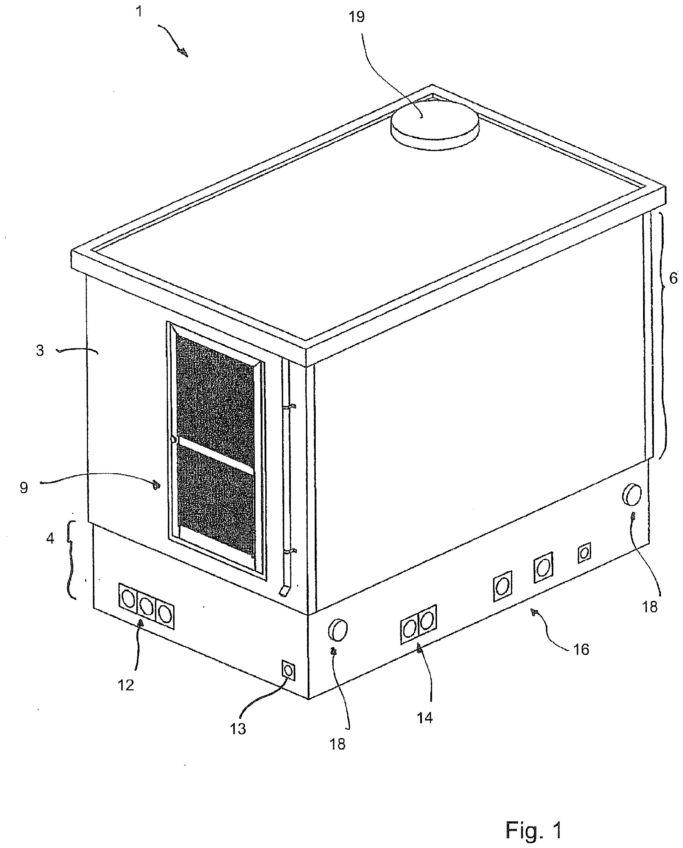

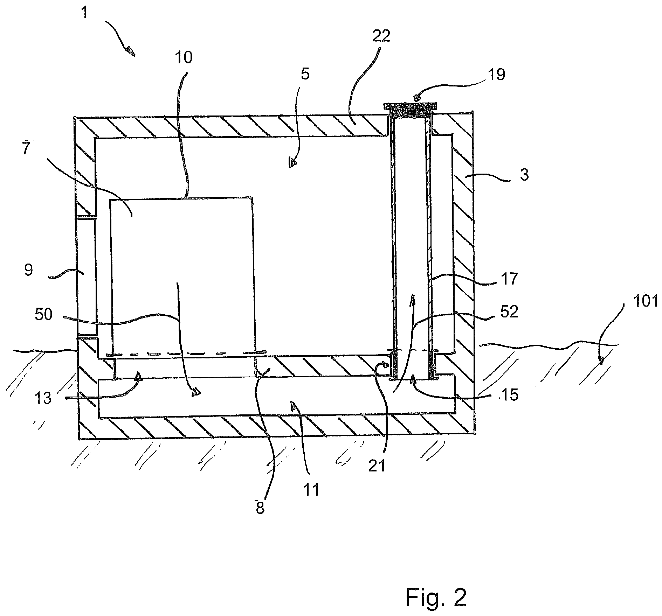

Figur 1 zeigte eine Übergabestation 1 gemäß einem bevorzugten Ausführungsbeispiel der Erfindung. Figur 2 zeigt eine schematische Querschnittsansicht durch jene Übergangsstation. Die Übergabestation 1 weist eine Umhausung 3 auf, die in einen im Erdreich einzulassenden Fundamentbereich 4 und einen oberhalb des Erdreichs verbleibenden Aufbau 6 aufweist. An dem Aufbau 6 ist eine verschließbare Tür 9 vorgesehen. Im Fundamentbereich 4 sind eine Mehrzahl Leitungsdurchführungen 12, 14 und 16 vorgesehen. Die Leitungsdurchführungen 12, 14, 16 dienen vorzugsweise als Kabeleinführungen. In einem weiteren Bereich des Fundaments 4, in Figur 1 in einem Eckbereich, ist ein Erdungspunkt 13 angeordnet. Die Übergabestation weist an ihren vier Ecken jeweils paarweise gegenüberliegende Anschlagpunkte 18 zur Anbringung von Hebegeschirr auf. Zwei dieser Anschlagpunkte sind in Figur 1 dargestellt. Aus Gründen der Übersichtlichkeit sind diese in Figur 2 nicht dargestellt.

Im Inneren der Übergabestation 1 ist eine Steuereinheit 7, exemplarisch dargestellt als ein Schaltschrank, angeordnet. Die Steuereinheit 7 weist vorzugsweise ein Gehäuse 10 und darin eine oder mehrere Schaltanlagen und/oder Messfelder auf. Sie ist auf einer Bodenplatte 8 angeordnet. In der Bodenplatte 8, welche einen ersten Raum 5 und einen zweiten Raum 11 voneinander trennt, ist eine erste Ausnehmung 13 vorgesehen. Die Steuereinheit 7 ist unmittelbar an die Ausnehmung 13 angrenzend auf dieser angeordnet. Der zweite Raum 11 ist durch das Verschließen der Ausnehmung 13 mittels der Steuereinheit 7 von dem ersten Raum 5 getrennt.

Weiterhin ist in der Bodenplatte 8 eine Durchführungsöffnung 15 ausgebildet. In der Durchführungsöffnung 15 ist ein Fallrohr 17 eingesetzt, welches sich durch die Durchführungsöffnung 15 hindurch nach unten in den zweiten Raum 11 hinein erstreckt, und aus einer Deckenwandung 22 nach oben aus dem ersten Raum 5 hinausgeführt ist. Alternativ wird die Ausführung über eine Seitenwandung bevorzugt. Die Abluftleitung, die durch das Fallrohr 17 gebildet ist, mittels eines Flansches 21 an der Bodenplatte 8 der Übergabestation 1 befestigt. Der Flansch 21 ist in die Bodenplatte 8 einbetoniert, und vorzugsweise als Stahlflansch ausgebildet. Das Fallrohr 17 weist zur optimalen Befestigung an dem Flansch 21 vorzugsweise einen korrespondierend ausgebildeten Kragen auf, der mit gängigen Flanschverbindungsmitteln mit dem Flansch 21 koppelbar ist. An einem in Figur 2 oberen Ende des Fallrohres 17 ist ein Rückschlagelement 19 in Form einer Klappe angeordnet. Die Klappe wird aufgrund ihrer Schwerkraft, optional zusätzlich in Unterstützung durch eine oder mehrere Rückstellelemente wie beispielsweise Federn, in der gezeigten geschlossenen Position gehalten. In dieser Position ist die Abluftleitung geschlossen und versperrt.

Die Übergabestation 1 gemäß Figur 2 ist in das Erdreich 101 der Umgebung eingelassen, so dass eine Verlegung der stromnetzseitigen Anschlusskabel im Erdreich direkt in den zweiten Raum 11 hinein erfolgen kann, und der erste Raum 5 andererseits von außen mittels der Tür 9 begehbar bleibt.

Entsteht ein Lichtbogen infolge beispielsweise von Schaltungsdefekten, breitet sich dieser von der Steuereinheit, welche Entstehungsort ist, in Richtung des Weges des geringsten Widerstands aus. Da die Wandungen des Gehäuses 10 der Steuereinheit 7 für solche Schadensfälle auf ausreichende Stabilität ausgelegt sind, breitet sich der Lichtbogen und mit ihm eine entstehende Druckwelle (aufgrund von Gasanzündung) nach unten hin aus, denn die Steuereinheit 7 ist, dargestellt durch eine Strichellinie, nach unten im Wesentlichen offen ausgebildet bzw. weist eine vorbestimmte Versagensstelle auf, die im Falle eines Druckanstiegs innerhalb der Steuereinheit 7 "den Weg frei gibt". Der Lichtbogen und die Druckwelle, sowie der mit ihr entstehende Rauch breiten sich bei Auftreten eines solchen Zwischenfalls in Richtung des Pfeils 50 zunächst nach unten aus. Abgesehen von geringem Rauchaustritt durch potentiell undichte Stellen der Steuereinheit 7 in den ersten Raum 5 hinein bleibt der erste Raum 5 weitestgehend unbeeinträchtigt von der Druckwelle und insbesondere dem entstehenden Rauch. Dieser wird in den zweiten Raum 11 hineingedrängt und breitet sich sodann durch die Abluftleitung, insbesondere das Fallrohr 17 in Richtung des Pfeils 52 aus. Bei Überschreiten eines bestimmten, vorhersagbaren Druckschwellwertes gibt die Klappe 19 die Abluftleitung frei, und Rauch und Überdruck entweichen aus der Umhausung 3 nach außen in die Umgebung. Nach erfolgtem Freigeben aus der in Figur 2 gezeigten Sperrposition in Richtung einer Freigabeposition sinkt der Druck im Inneren der Übergabestation 1 rasch wieder unterhalb des für die Auslösung kritischen Schwellwertes, wodurch die Klappe 19 wieder in ihre ursprüngliche Sperrposition zurückfällt. Hierdurch bleibt der Innenraum der Übergabestation 1 weitestgehend von äußeren Einflüssen geschützt, während gleichzeitig ein Ablassen des Großteils an gesundheitsgefährdendem Rauch erfolgen konnte.

Mit der gezeigten Ausführungsform stellt die Erfindung ein Mittel zur Verbesserung der Anlagensicherheit bereit. Der Raum 5 im Inneren der Übergabestation 1 wird durch das gezielte Ableiten des Lichtbogens in den zweiten Raum 11 hinein sicherer. Dadurch, dass der erste Raum 5 nach Gewährleistung der Störlichtbogen-Ableitung selbst im Störfall als im Wesentlichen druckwellenfrei betrachtet werden kann, wird die Gefährdung insbesondere im Inneren des ersten Raums 5 befindlicher Personen infolge eines Lichtbogens signifikant herabgesetzt.

## Patentansprüche

1. Übergabestation (1) zur Einspeisung lokal bereitgestellter elektrischer Energie, insbesondere bereitgestellt von einer Windenergieanlage, in ein Stromnetz, mit
- einem stromnetzseitigen Leitungsanschluss,
- einer Steuereinheit (7), die zum Regeln der Netzeinspeisung, insbesondere zum Wandeln der lokal bereitgestellten elektrischen Energie und der Netzeinspeisung mittels des stromnetzseitigen Leitungsanschlusses eingerichtet ist, und
- einer vorzugsweise wetterfesten und abschließbaren Umhausung (3), innerhalb welcher die Leitungsanschlüsse, die Verbindungsmittel und die Steuereinheit (7) angeordnet sind, wobei
- die Umhausung (3) einen ersten, begehbaren Raum (5) und einen zweiten, mittels einer Abluftleitung mit der Außenwelt verbundenen Raum (11) aufweist,
- der erste Raum (5) und der zweite Raum (11) mittels einer gemeinsamen Ausnehmung miteinander verbunden sind,
- die Steuereinheit (7) die gemeinsame Ausnehmung (13) verschließt, und
wobei ein Gehäuse (10) der Steuereinheit (7) im Bereich des Verschlusses der Ausnehmung (13) offen ist und/oder eine Sollbruchstelle aufweist, die zum Versagen bei Entstehen eines Lichtbogens innerhalb der Steuereinheit (7) angepasst ist,
**dadurch gekennzeichnet, dass** sich die Abluftleitung von dem zweiten Raum (11) aus durch eine Durchführungsöffnung (15) in den ersten Raum (5) hinein und durch den ersten Raum (5) hindurch erstreckt, und aus einer Seiten- oder Deckenwandung der Umhausung (3) aus dem ersten Raum (5) herausgeführt ist, und
wobei die Abluftleitung mittels eines teilbaren Flansches (21) durch die Durchführungsöffnung (15) hindurchgeführt ist.

2. Übergabestation (1) nach Anspruch 1,
wobei die Abluftleitung ein Fallrohr (17) aufweist mit einem Rückschlagelement (19), wobei das Rückschlagelement (19) dazu eingerichtet ist, das Fallrohr (17) bei Überdruck in dem zweiten Raum (11) freizugeben.

3. Übergabestation (1) nach Anspruch 2,
wobei das Rückschlagelement (19) zwischen einer Sperrposition und einer Freigabeposition hin- und herbewegbar ist.

4. Übergabestation (1) nach Anspruch 2 oder 3,
wobei das Rückschlagelement (19) mittels im zweiten Raum (11) herrschenden Überdrucks ab Erreichen eines kritischen Druckwertes aus der Sperrposition in die Freigabeposition bewegbar ist, und bei Unterschreiten des kritischen Druckwertes mittels der Schwerkraft und/oder mittels eines Rückstellmittels selbsttätig in die Sperrposition zurückkehrt.

5. Übergabestation (1) nach einem der Ansprüche 2 bis 4,
wobei der zweite Raum (11) unterhalb des ersten Raumes (5) angeordnet und durch eine gemeinsame Wandung (8) von diesem getrennt ist.

6. Windenergieanlagenpark, mit
- einer oder mehreren Windenergieanlagen zur Bereitstellung elektrischer Energie, und
- einer oder mehreren Übergabestationen, die mittels elektrischer Leitungen mit der einen oder den mehreren Windenergieanlagen verbunden sind, wobei die eine oder mindestens eine der mehreren Übergabestationen (1) nach einem der Ansprüche 1 bis 5 ausgebildet ist.

## Claims

1. Transmission station (1) for feeding locally provided electrical energy, in particular provided by a wind power installation, into a grid, having
- a line connection belonging to the grid,
- a control unit (7) that is configured to regulate feed-in, in particular to transform the locally provided electrical energy and feed-in by means of the line connection belonging to the grid, and
- a preferably weather-proof and lockable housing (3), within which the line connections, fasteners and the control unit (7) are arranged, with
- such housing (3) featuring a first, accessible room (5) and a second room (11) that is connected to the outside world by means of an exhaust pipe,
- such first room (5) and second room (11) being connected to each other by means of a joint recess,
- such control unit (7) closing the joint recess (13), and
with one casing (10) of the control unit (7) being open in the area where the recess (13) is closed and/or showing a predetermined breaking point that is adapted to fail if an electric arc occurs inside the control unit (7),
**characterized in that** the exhaust pipe extends from the second room (11) into the first room (5) through a lead-through opening (15) and across the first room (5), and leaves the first room (5) through a side or ceiling wall of the housing (3), and
wherein the exhaust pipe is led through the lead-through opening (15) by means of a divisible flange (21).

2. Transmission station (1) according to Claim 1,
wherein the exhaust pipe features a down pipe (17) with a backlash element (19), wherein such backlash element (19) is configured to release the down pipe (17) in case of overpressure in the second room (11).

3. Transmission station (1) according to Claim 2,
wherein the backlash element (19) can be moved back and forth between a locked position and a released position.

4. Transmission station (1) according to Claim 2 or 3,
wherein the backlash element (19) can be moved from locked to released position by means of the overpressure in the second room (11), once a critical pressure value has been reached, and automatically back to the locked position due to the force of gravity and/or by means of a return means, once the pressure falls below a critical value.

5. Transmission station (1) according to one of Claims 2 through 4,
wherein the second room (11) is arranged underneath the first room (5), from which it is separated by a joint wall (8).

6. Wind farm, having
- one or more wind power installations for providing electrical energy, and
- one or more transmission stations that are connected to the one or more wind power installations by means of electrical lines, wherein
the one or at least one of the several transmission stations (1) is designed according to one of the Claims 1 through 5.

## Revendications

1. Poste de transfert (1) servant à injecter une énergie électrique fournie de manière locale, en particulier fournie par une éolienne, dans un réseau électrique, avec
- un raccord de conduit du côté du réseau électrique,
- une unité de commande (7), qui est mise au point pour réguler l'injection dans le réseau, en particulier pour convertir l'énergie électrique fournie de manière locale et l'injection dans le réseau au moyen du raccord de conduit du côté du réseau électrique, et
- une enceinte (3) de préférence résistante aux intempéries et pouvant être fermée, à l'intérieur de laquelle les raccords de conduit, les moyens de liaison et l'unité de commande (7) sont disposés, dans lequel
- l'enceinte (3) présente un premier espace (5) pouvant être emprunté et un deuxième espace (11) relié au monde extérieur au moyen d'un conduit d'évacuation d'air,
- le premier espace (5) et le deuxième espace (11) sont reliés l'un à l'autre au moyen d'un évidement commun,
- l'unité de commande (7) ferme l'évidement (13) commun, et
dans lequel un boîtier (10) de l'unité de commande (7) est ouvert dans la zone de la fermeture de l'évidement (13) et/ou présente un emplacement de rupture théorique, qui est adapté pour tomber en panne lors de la formation d'un arc électrique à l'intérieur de l'unité de commande (7),
**caractérisé en ce que**
le conduit d'évacuation d'air s'étend depuis le deuxième espace (11) à l'intérieur du premier espace (5) en passant par une ouverture de passage (15) et à travers le premier espace (5) de part en part et est guidé depuis une paroi latérale ou formant couvercle de l'enceinte (3) hors du premier espace (5), et
dans lequel le conduit d'évacuation d'air est guidé à travers l'ouverture de passage (15) de part en part au moyen d'une bride (21) pouvant être divisée.

2. Poste de transfert (1) selon la revendication 1,
dans lequel le conduit d'évacuation d'air présente un tuyau de descente (17) avec un élément de retenue (19), dans lequel l'élément de retenue (19) est mis au point pour débloquer le tube de descente (17) en cas de surpression dans le deuxième espace (11).

3. Poste de transfert (1) selon la revendication 2,
dans lequel l'élément de retenue (19) peut effectuer des mouvements de va-et-vient entre une position de blocage et une position de déblocage.

4. Poste de transfert (1) selon la revendication 2 ou 3,
dans lequel l'élément de retenue (19) peut être déplacé depuis la position de blocage dans la position de déblocage au moyen d'une surpression régnant dans le deuxième espace (11) une fois une valeur de pression critique atteinte, et revient de manière autonome dans la position de blocage en présence d'une valeur de pression inférieure à la valeur de pression critique au moyen de la force de gravité et/ou au moyen d'un moyen de rappel.

5. Poste de transfert (1) selon l'une quelconque des revendications 2 à 4,
dans lequel le deuxième espace (11) est disposé sous le premier espace (5) et est séparé de ce denier par une cloison (8) commune.

6. Parc éolien avec
- une ou plusieurs éoliennes servant à fournir une énergie électrique,
et
- un ou plusieurs postes de transfert, qui sont reliés aux une ou plusieurs éoliennes au moyen de lignes électriques, dans lequel
le poste de transfert ou au moins un des plusieurs postes de transfert (1) est réalisé selon l'une quelconque des revendications 1 à 5.
